# EUROPEAN PATENT SPECIFICATION

(11) **EP 2 564 636 B1**
(45) Date of publication and mention of the grant of the patent: **01.03.2017**
(21) Application number: 11716558.9
(22) Date of filing: 28.04.2011
(51) Int. Cl.: H04W 36/32

(54) **HANDOVER PREPARATIONS**
VORBEREITUNGEN FÜR EINEN ÜBERGABEPROZESS
PRÉPARATIONS DE TRANSFERT INTERCELLULAIRE

(30) Priority: 30.04.2010 GB 201007260
(43) Date of publication of application: 06.03.2013
(73) Proprietor: Nokia Solutions and Networks Oy, 02610 Espoo (FI)
(72) Inventor: RAAF, Bernhard, 82061 Neuried (DE); REDANA, Simone, 81541 Munich (DE); TEYEB, Oumer, DK-9000 Aalborg (DK)
(74) Representative: Borgström, Markus
(86) International application number: PCT/EP2011/056720
(87) International publication number: WO 2011/135019

(56) References cited:
- EP-A2- 2 136 589
- WO-A1-2009/106615
- US-A1- 2007 258 407
- "LTE; Evolved Universal Terrestrial Radio Access Network (E- UTRAN); X2 Application Protocol (X2AP) (3GPP TS 36.423 version 9.2.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 3, no. V9.2.0, 1 April 2010 (2010-04-01), XP014046924,

## Description

The present invention relates to preparations for the handover of a communication device from an existing access node to a new access node. In one embodiment, the present invention relates to making preparations for the handover of a communication device from a relay access node.

A communication device can be understood as a device provided with appropriate communication and control capabilities for enabling use thereof for communication with others parties. The communication may comprise, for example, communication of voice, electronic mail (email), text messages, data, multimedia and so on. A communication device typically enables a user of the device to receive and transmit communication via a communication system and can thus be used for accessing various service applications.

A communication system is a facility which facilitates the communication between two or more entities such as the communication devices, network entities and other nodes. A communication system may be provided by one or more interconnect networks. One or more gateway nodes may be provided for interconnecting various networks of the system. For example, a gateway node is typically provided between an access network and other communication networks, for example a core network and/or a data network.

An appropriate access system allows the communication device to access to the wider communication system. An access to the wider communications system may be provided by means of a fixed line or wireless communication interface, or a combination of these. Communication systems providing wireless access typically enable at least some mobility for the users thereof. Examples of these include wireless communications systems where the access is provided by means of an arrangement of cellular access networks. Other examples of wireless access technologies include different wireless local area networks (WLANs) and satellite based communication systems.

A wireless access system typically operates in accordance with a wireless standard and/or with a set of specifications which set out what the various elements of the system are permitted to do and how that should be achieved. For example, the standard or specification may define if the user, or more precisely user equipment, is provided with a circuit switched bearer or a packet switched bearer, or both. Communication protocols and/or parameters which should be used for the connection are also typically defined. For example, the manner in which communication should be implemented between the user equipment and the elements of the networks and their functions and responsibilities are typically defined by a predefined communication protocol. Such protocols and or parameters further define the frequency spectrum to be used by which part of the communications system, the transmission power to be used etc.

In the cellular systems a network entity in the form of a base station provides a node for communication with mobile devices in one or more cells or sectors. It is noted that in certain systems a base station is called 'Node B'. Typically the operation of a base station apparatus and other apparatus of an access system required for the communication is controlled by a particular control entity. The control entity is typically interconnected with other control entities of the particular communication network. Examples of cellular access systems include GSM (Global System for Mobile) EDGE (Enhanced Data for GSM Evolution) Radio Access Networks (GERAN), Universal Terrestrial Radio Access Networks (UTRAN), evolved Universal Terrestrial Radio Access Networks (EUTRAN).

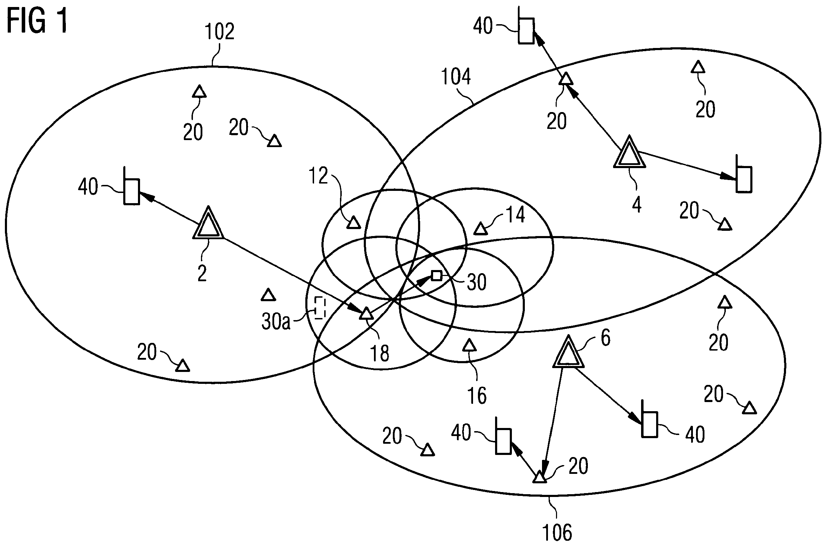

Recent developments from EUTRAN are Long Term Evolution (LTE) and LTE-Advanced (LTE-A). Relaying is a proposed technology for 3GPP LTE-Advanced networks. Base stations (eNB) operate in an enhanced UTRAN (E-UTRAN) cellular network; and relay nodes (RN) are deployed to extend coverage in the cellular network and to also help in the provisioning of high data rate coverage in high shadowing environments (e.g. inside buildings) and high-traffic hotspots. An example of how an eNB of a LTE radio access network is deployed with fixed relay nodes is shown in Figure 1, which is discussed in more detail below. Tasks of a relay node include: forwarding data between an eNB and a communication device in downlink, and communications from a communication device to the eNB in uplink.

Where a relay node is serving a mobile communication device, it often becomes necessary to handover the communication device to another relay node RN or base station eNB as the communication devices moves out of the area served by the current relay node. Based on reports from the mobile communication device of the results of measurements made by it of the received power of reference signals transmitted by the current relay node and other access nodes within range of the communication device, the current relay node identifies a target access node, and generates and sends a handover request message addressed to the target access node (either another relay node or a base station) over the wireless interface between the current (source) relay node and the base station (eNB) that serves the source relay node. Several handover requests can be sent in parallel to different target access nodes identified by the source relay node as possible handover candidates. When a target access node receives the handover request message, the target access node performs admission control. If this admission control is successful, the target access node replies with a handover request acknowledgement message addressed to the source relay node. When the source relay node receives the handover request acknowledgement message, it sends a handover cancellation message to all the other target nodes that it has previously sent a handover request to, if any. If the handover request acknowledgment message is received from more than one target nodes the source relay node selects only one of them and sends the cancellation message to the others. Then, it transmits a Radio Resource Control (RRC) reconfiguration message to the communication device, including a mobility control information which is understood by the communication device as an instruction to start the handover towards the target access node. Sending handover requests in parallel to a number of target access nodes identified by the source relay node increases the chance that a handover acknowledgement message will be received quickly from at least one access node at the source relay node.

An example is known from WO 2009/106615. EP2136589 describes a technique for achieving handover across wireless base stations.

It is an aim of the present invention to provide an improved technique for performing preparations for a handover between an intermediate access node such as a relay node of the kind described above and a new access node.

The present invention provides a method according to claim 1.

In one embodiment, the field includes a series of respective identifiers for the plurality of access nodes.

In one embodiment, the respective identifiers are arranged in order of preference.

In one embodiment, the field includes an identifier for a group of access nodes.

In one embodiment, the field is of variable length, and the handover request message includes a separate identification of the number of access nodes identified in said field.

In one embodiment, said field is of predetermined fixed length.

The present invention also provides a method according to claim 4.

In one embodiment, the method further comprises: sending a respective second handover request message to one or more of said access nodes identified in the first handover request message.

In one embodiment, the method further comprises: sending a plurality of said second handover request messages to a plurality of said access nodes identified in the first handover request message, receiving from one of said plurality of access nodes an indication that said access node has resources to be said new access node for the communication device, and sending a handover cancellation message to at least some of the remaining ones of said plurality of access nodes.

In one embodiment, the method further comprises: sending said second handover request messages to said plurality of access nodes in accordance with the preference indicated by the order in which said plurality of access nodes are identified in the first handover request message.

In one embodiment, the method further comprises sending said second handover request message to a first one of said plurality of access nodes, and sending said second handover request message to another of said plurality of access nodes only if an indication that said first one of said plurality of access nodes does have resources to be the new access node for the communication device is not received with a predetermined time.

In one embodiment, the method further comprises: determining the number of bits used to identify each access node on the basis of information collected about the environment of the intermediate access node.

In one embodiment, the first handover request message includes an explicit identification of the number of access nodes identified in said first handover request message, and the method further comprises determining the number of bits used to identify each access node in said first handover request on the basis of said explicit identification in said first handover request message of the number of access nodes identified in said first handover request message.

In one embodiment, the first handover request message identifies said plurality of access nodes by an identifier for a group whose composition is known to the receiver of the first handover request message.

The present invention also provides apparatus according to claims 12 and 13.

The present invention also provides computer program products according to claims 14 and 15.

The present invention also provides a system, comprising: a communication device, a base access node, and one or more relay nodes via which the base access node and the communication device communicate via one more wireless interfaces; wherein one or more of the relay nodes are configured to transmit via a wireless interface to said base access node or another of said relay nodes a handover request message relating to handover of a communication device from one of said relay nodes to a new access node, wherein the handover request message identifies a plurality of access nodes as candidates for the new access node.

Hereunder embodiments of the present invention will be described, by way of example only, with reference to the following drawings, in which:
Figure 1 illustrates a system in which embodiments of the present invention are implemented;
Figure 2 illustrates a user equipment shown in figure 1 in further detail;
Figure 3 illustrates an apparatus suitable for implementing an embodiment of the invention at a relay node or base station of the system shown in figure 1;

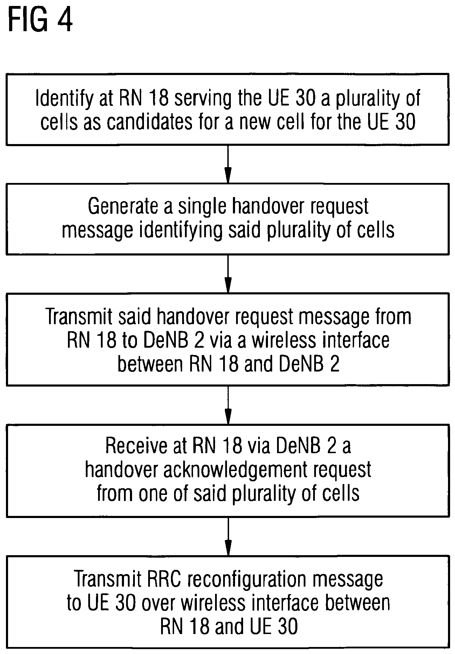

Figure 4 illustrates a method of operating a relay node of Figure 1 in accordance with an embodiment of the present invention; and

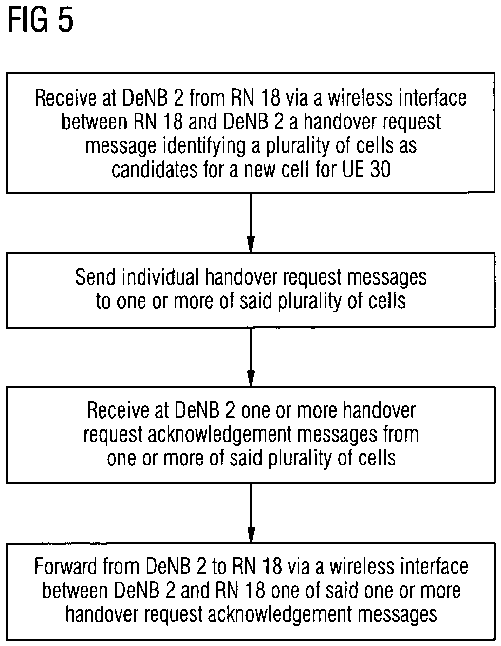

Figure 5 illustrates a method of operating a donor base station of Figure 1 in accordance with an embodiment of the present invention.

A LTE-A network has been chosen to describe an embodiment of the invention; but the invention is also of use in other networks using relay nodes and wireless links between the relay nodes and base access nodes.

Figure 1 illustrates three cells of a E-UTRAN network deployed with relay nodes. The base stations (DeNB) 2, 4 and 6 with respective coverage areas 102, 104 and 106 communicate directly with one or more user equipments 30, 40, and also indirectly with other user equipments 40 via respective relay nodes 12, 14, 16, 18 and 20 with which the base stations 2, 4 and 6 communicate via a wireless interface. Each of the relay nodes 12, 14, 16 and 18 has a respective coverage area which may lie wholly within the coverage area of the respective donor base station (DeNB) or may extend partly out of the coverage area of the respective donor base station DeNB 2. The relay nodes can be useful in overcoming excessive shadowing, or facilitating an increase in throughput in areas of high traffic (hotspots). The latter kind of relay node can be additionally useful for extending the effective coverage of a base station (DeNB) e.g. the coverage where certain data rates can be achieved.

For the description of embodiments of the present invention, we have chosen the situation of a user equipment (UE) 30 which is currently served by DeNB 2 via relay node (RN) 18, and as moved from a position 30a to a current position in which it is near the edge of the area served by relay node 18 and is now within the areas served indirectly by relay nodes 12, 14 and 16 and also directly by DeNB 6. Relay nodes 12 and 18 are associated with DeNB 2; relay node 14 is associated with DeNB 4; and relay node 16 is associated with DeNB 6. The base stations (DeNB) will typically have a large number of relay nodes associated with each thereof.

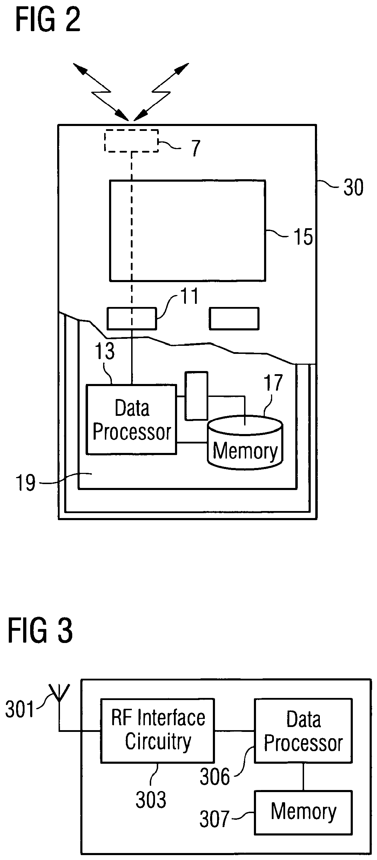

Figure 2 shows a schematic partially sectioned view of an example of user equipment that may be used for at least receiving data directly or indirectly from an eNB via one or more wireless interfaces. The user equipment may be used for various tasks such as making and receiving phone calls, for receiving and sending data from and to a data network and for experiencing, for example, multimedia or other content.

The user equipment may be any device capable of at least sending or receiving radio signals. Non-limiting examples include a mobile station (MS), a portable computer provided with a wireless interface card or other wireless interface facility, personal data assistant (PDA) provided with wireless communication capabilities, or any combinations of these or the like. The user equipment may communicate via an appropriate radio interface arrangement of the user equipment. The interface arrangement may be provided for example by means of a radio part 7 including associated antenna arrangement. The antenna arrangement may be arranged internally or externally to the user equipment.

The user equipment may be provided with at least one data processing entity 13 and at least one memory or data storage entity 17 for use in tasks it is designed to perform. The data processor 13 and memory 17 may be provided on an appropriate circuit board 19 and/or in chipsets.

The user may control the operation of the user equipment by means of a suitable user interface such as key pad 11, voice commands, touch sensitive screen or pad, combinations thereof or the like. A display 15, a speaker and a microphone may also be provided. Furthermore, the user equipment may comprise appropriate connectors (either wired or wireless) to other devices and/or for connecting external accessories, for example hands-free equipment, thereto.

Figure 3 shows an example of an apparatus for use at a relay node or at a base station (eNB). The apparatus comprises a plurality of radio frequency antennae 301 configured to receive and transmit radio frequency signals, radio frequency interface circuitry 303 configured to interface the radio frequency signals received and transmitted by the antennae 301 and the data processor 307. The radio frequency interface circuitry may also be known as a transceiver. The data processor 307 is configured to process signals from the radio frequency interface circuitry 303, control the radio frequency interface circuitry 303 to generate suitable RF signals to communicate information to a relay node or a user equipment via a wireless communications link. The apparatus further comprises a memory 307 for storing data, parameters and instructions for use by the data processor 305.

It will be appreciated that both the user equipment and relay node/eNB apparatus shown in figures 2 and 3 respectively and described above may comprise further elements which are not directly involved with the embodiments of the invention described hereafter.

In its current position, UE 30 detects reference signals from relay nodes 12, 14 and 16 and base station 6 in addition to the reference signal from the relay node 18 that is currently serving UE 30. Reports of the measurements of these reference signals are communicated to the source relay node 18. Based on the received measurement reports, relay node 18 decides to make a handover request for UE 30.

According to a first embodiment of the present invention, the serving relay node 18 generates a handover request message of the exact format specified at section 9.1 of 3GPP 36.423. The handover request message is a request to prepare resources for a handover, and is sent from the source relay node 18 via its controlling DeNB 2. The handover request message includes a "Target Cell ID" information element comprising a 28-bit ECGI (Enhanced UTRAN Cell Global Identifier) field intended to hold a series of 28 bits identifying the ECGI of one target cell. According to this first embodiment of the invention, the RN 18 instead includes in the 28-bit ECGI field a series of bits that identify some or all of the access nodes 12, 14, 16 and 6. For example, up to three of these access nodes could be identified in the 28-bit ECGI field by using the Physical Cell ID (PCI) for those nodes instead of the ECGI. There are only 504 possible PCI values (0 to 503), and 9-bits are therefore sufficient to indicate any PCI value. According to Self Optimised Networks (SON) principles, it is not allowed to use the same PCI value for more than one access node in the neighbourhood of relay node 18, and the DeNB 2 can therefore map the PCI values indicated in the ECGI field of the handover request message to ECGI values of the target nodes. The 28-bit ECGI field is filled with three 9-bit PCI values and a spare bit that may e.g. be set to 0. In the case that RN 18 has only identified two cells as target cell candidates, the relay node 18 includes a series of 9 "1" bits in place of a third PCI value, or any other predefined value that is not used as PCI value in the vicinity. According to one variation, one of the PCI values of the target cell candidates is repeated. This repetition indicates to the receiver of the message that the number of target cell candidates is less than the maximum number of target cells that can be identified in the ECGI field. This variation has the advantage that no predefined value needs to be reserved.

For example, if the relay node 18 decides to specify only two target cells having PCI values of 150 and 345, the relay node 18 fills the ECGI field with the following series of bits: 0100101101010110011111111110, wherein the final "0" bit is the spare bit. Or, for the variation mentioned above, the relay node 18 fills the ECGI field with the following series of bits: 0100101101010110011010110010, where "101011001" appears two times.

According to one variation, less than 9 bits are used to identify each target cell/access node. For example, if the number of neighbouring cells/access nodes is no higher than 15 (or even 16 if no predefined value is used to indicate no target), it suffices to use a 4 bit code to identify the targets rather than the 9 bit PCI, which allows up to seven target cells to be specified in the 28-bit ECGI field. The DeNB 2 maps each target identification code to an ECGI value based on the information it has about the environment of the relay node 18 and the bit codes used to identify the cells/access nodes in that environment. In this embodiment, there is no need to include in the handover request message any separate indication in the handover request message of the number of cells identified in the ECGI field. The DeNB can deduce the number of bits used to identify a single target cell without such a separate indication.

According to a second embodiment, a modified version of the handover request message specified in 3GPP 36.423 is used. The handover request message is exactly the same as that specified in 3GPP 36.423 except that an extra information element is added that identifies a set of target cells/access nodes rather than having just one ECGI field denoting the single "target cell ID" as specified in 3GPP 36.423. This second embodiment has the advantage that the size of the ECGI field can be varied according to the number of target cells/access nodes to be identified. For example, where less than 28-bits are needed to identify all the target cells/access nodes, the size of the ECGI field is reduced thereby lowering the overhead. On the other hand, the ECGI field could also be expanded beyond the normal 28-bits to make it possible to identify a greater number of target cells/access nodes in the same handover request message. For example, the ECGI field could be expanded to 40 bits in order to identify 10 target cells/access nodes, if 4-bit long IDs were used to identify the neighbours of the relay node.

In each of these first and second embodiments, both (i) the number of bits used to identify one target cell/access node and (ii) the ID values for the cells/access nodes in the environment of the relay node 18, can be communicated explicitly between the DeNB 2 and the relay node 18. Alternatively, both (i) and/or (ii) can be deduced independently by the DeNB 2 and the relay node 18 in accordance with pre-agreed rules. For example, the rules could specify an incremental ID assignment each time a new cell/access node is added in the neighbour list of the relay node 18, and the number of bits required is implicitly deducted from the current total number of neighbours for the relay node. As the DeNB serves to forward all communications between the RN and its neighbouring cells, it can be aware of the number and identity of the neighbours of the RN.

In the above-described first and second embodiments, the ID values can be listed in the ECGI/composite target ID field in order of preference/identity, and the DeNB 2 can initially send a handover request message only to the access node of highest priority/preference and refrains from sending a handover request message to any of the other access nodes identified in the ECGI/composite target ID field of the handover request message from relay node 18 unless it fails to receive a handover request acknowledgement message from the access node of highest priority/preference within a predetermined time. If the DeNB 2 receives a handover rejection message from the access node of highest preference/priority, or timers expire before the receipt of a handover acknowledgement request message from the access node of highest priority/preference, DeNB 2 then sends a handover request message to the access node of second highest preference/priority, and so on. According to one variation, the DeNB 2 simultaneously sends handover request messages to all access nodes identified in the ECGI/composite target ID field of the handover request message from relay node 18. The DeNB selects the access node of highest priority from which it receives a handover request acknowledgment message within a predetermined time, and forwards only that handover request acknowledgment message to the relay node 18. Where the DeNB receives a handover request acknowledgement message from the access node of highest priority/preference before it receives a reply to handover request messages sent to access nodes of lower preference/priority, it sends handover cancellation request messages to those access nodes of lower preference/priority. According to a further variation, the DeNB first sends a handover request message to a subset of access nodes of highest priority/preference; and if the DeNB does not receive an acknowledgement from any of the access nodes in that high priority subset within a predetermined time, DeNB then sends handover request messages to a further subset of access nodes of lower priority/preference.

In a third embodiment of the present invention, the cells/access nodes in the environment of the relay node 18 are divided into groups, and the relay node 18 includes in the handover request an identifier of one or more of said groups. The grouping can be carried out based on several criteria such as cell measurement reports from UEs in the area/cell served by relay node 18, and the grouping is communicated to the DeNB 2. For example, relay node 18 notices from the measurement reports of a certain UE that the UE is likely to handover to one of cells a,b and c, and identifies this set of three cells as Group A and communicates this information to the DeNB 2. The measurements received from another UE indicate that said another UE is likely to be handed over to cell a or cell b, and the relay node 18 identifies this pair of cells as Group B and communicates this information to the DeNB 2, and so on. When the time comes to handover the first UE, the handover request message generated at the relay node need only include the ID for Group A rather than all the separate IDs for the three cells a, b and c. As UEs within a cell will often move along the same paths, e.g. along a street, it is likely that these same groups of cells will also define the whole set of target cell candidates for subsequent handovers for other UEs. It is unlikely that all possible combinations of cells/access nodes within the environment of the relay node 18 will form a set of target cells for any UE. For example, it is unlikely that both a cell to the north of the relay node 18 and a cell to the south of the relay node 18 will ever be in the same set of target cells for any UE. Accordingly, it can be expected that the number of group ID values required will be less than the total number of possible combinations of access nodes/cells. The group ID values and the combinations of access nodes/cells for each group ID value can be signaled to the DeNB 2 using a bitmap.

Each relay node operates 4 different links ("Quadruplex") because there are both downlink and uplink transmissions in the same frequency band between the relay node and both the donor eNB and one or more UEs served by the donor eNB via the relay node. For frequency division duplex (FDD) systems, the provision of 4 links can be provided by additional time division multiplexing (TDM), for example on a sub-frame basis. This additional TDM can be achieved through several means, such as (i) switching the relay nodes between transmission and reception modes or (ii) switching the relay nodes between a DeNB mode and a UE mode, in which they communicate exclusively with the DeNB and UE, respectively (i.e. not simultaneously with both the DeNB and UE). In the latter case, one example of how the relay node might operate is to provide UE functionality to the DeNB in one TDM sub-frame, to provide DeNB functionality to the UE in the next TDM sub-frame, and so on.

In an LTE environment, an agreed upon method for providing TDM splitting for relaying purposes, without disrupting the standardized channel estimation mechanisms, is the use of the Multicast Broadcast Single Frequency Network (MBSFN) frame structure. OFDM (Orthogonal Frequency Division Multiplexing) symbols that are specified for MBSFN can be used to switch the relay node into an eNB reception mode for receiving signals from the eNB. Normal sub-frames are used for communications between the relay node and UEs, and MBSFN sub-frames are used for communications between the relay node and the DeNB. An example of this kind of technique is described in more detail in 3GPP TR 36.814.

The split of resources between the DeNB-RN link (also referred to as the backhaul link, relay link or the Un link) and the RN-UE link (also referred to as the access link or the Uu link) can be done dynamically or semi dynamically depending on the number of UEs connected to the DeNB and to the RNs. For example, if there are very few UEs connected to the RN, then having one subframe out of ten as a MBSFN sub-frame can suffice (i.e. for 1/10^{th} of the time, the RN will be disconnected from its UEs, and will receive downlink data from the DeNB on their behalf). However, if there are many UEs per RN, and/or the aggregate amount of relayed UE traffic is high, the MSBSFN sub frame reoccurrence rate can be increased to accommodate this.

The above-described handover techniques make it possible to achieve faster handovers in a relay enhanced LTE-advanced network.

The above-described handover techniques avoid having to send in relation to a single handover operation multiple handover request messages from the source relay node towards a plurality of target cells via the backhaul Un link between the source relay node and the source donor base station (DeNB). The backhaul link between the source RN and the source DeNB is used only once to identify to the source DeNB a plurality of candidate cells for the handover. These techniques are therefore advantageous from the point of view of minimising the consumption of resources on the backhaul link.

The above-described techniques also avoid the problem of the source DeNB receiving from the relay node identifiers of different target cells at different subframes, which could happen if each of the plurality of target cells were identified in respective handover request messages from the relay node, and there were resource limitations on the Un link whereby it was not possible to send multiple handover requests within one subframe. It should be noted that the full capacity of the link might allow the sending of multiple handover requests within one subframe, but generally only a subset of the capacity is allocated to the respective RN while the rest of the capacity may be allocated to other RNs or UEs. Reallocating of extra capacity to the RN in question would be possible, but would again cause delay, which is avoided with the above-described techniques according to embodiments of the invention.

Also, the above-described techniques make it possible to avoid having to send any handover cancellation messages from the source RN via the source DeNB, which would also consume resources on the Un link between the source RN and source DeNB. In the above-described techniques, all required handover cancellation messages are generated at the source DeNB, not at the source RN.

For the sake of simplicity of presentation, we have chosen for the description of embodiments of the invention the case that the RN is directly connected to a DeNB via a wireless interface. However, the invention is equally applicable to networks where a RN is connected to a DeNB via a further RN (intermediate RN) or a chain of further RNs (intermediate RNs), which arrangement is sometimes called a multi-hop arrangement. In that case, the invention can be implemented in a similar way to that described above, both in terms of operations at the final DeNB and also at intermediate RNs. For example, where an intermediate RN receives from a lower RN (i.e. a RN between it and the UE to which the handover request message relates) a handover request message identifying a plurality of target cell candidates, then depending on the position of said intermediate RN in relation to the target cell candidates; it might do one or more of the following: (a) send a single handover request message (identifying a single target cell) to another RN which is connected to itself via a wireless interface; and/or (b) send a composite handover request message (i.e. a message identifying a plurality of target cell candidates) to another RN (in a chain of RNs between it and a DeNB i.e. to a super-ordinate RN); and/or (c) send a composite handover request message (i.e. a message identifying a plurality of target cell candidates) to another RN which is linked via said intermediate RN to the DeNB, i.e. to a subordinate RN; , and/or (d) forward a(composite or single) handover request to a DeNB. The messages (a) and (c) can be realized with the same handover request message, i.e. relating both to the directly subordinate RN and all other RNs subordinate to that RN.

The intermediate RN acts as the base station of the previously described embodiments with the difference that the composite handover request might be separated in two or more composite handover requests depending on where the identified target nodes are in the network topology.

The above-described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

For example the embodiments of the invention may be implemented as a chipset, in other words a series of integrated circuits communicating among each other. The chipset may comprise microprocessors arranged to run code, application specific integrated circuits (ASICs), or programmable digital signal processors for performing the operations described above.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, comprising: transmitting from a relay node (18) via a wireless interface to an access node (2) associated with said relay node a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes.

2. A method according to claim 1, wherein the field includes a series of respective identifiers for the plurality of access nodes, and the respective identifiers are arranged in order of preference.

3. A method according to claim 1, wherein the field is of variable length; and the handover request message includes a separate identification of the number of access nodes identified in said field.

4. A method comprising: receiving from a relay node (18) at an access node (2) associated with said relay node via a wireless interface a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes.

5. A method according to claim 4, wherein the field comprises a plurality of physical cell IDs for identifying the plurality of access nodes and wherein the field is a cell global identifier field.

6. A method according to claim 4, comprising: sending a respective handover request message to one or more of said access nodes identified in the handover request message received from the relay node (18), sending a plurality of handover request messages to a plurality of said access nodes identified in the handover request message received from the relay node (18), receiving from one of said plurality of access nodes an indication that said access node has resources to be said new access node for the communication device, and sending a handover cancellation message to at least some of the remaining ones of said plurality of access nodes.

7. A method according to claim 4, comprising: sending a respective handover request message to one or more of said access nodes identified in the handover request message received from the relay node (18), sending handover request messages to said plurality of access nodes in accordance with the preference indicated by the order in which said plurality of access nodes are identified in the handover request message received from the relay node (18).

8. A method according to claim 4, comprising: sending a respective handover request message to one or more of said access nodes identified in the handover request message received from the relay node (18), sending a handover request message to a first one of said plurality of access nodes, and sending a handover request message to another of said plurality of access nodes only if an indication that said first one of said plurality of access nodes does have resources to be the new access node for the communication device is not received with a predetermined time.

9. A method according to any of claims 4 to 8, further comprising determining the number of bits used to identify each access node on the basis of information collected about the environment of the intermediate access node.

10. A method according to any of claims 4 to 8, wherein the handover request message received from the relay node includes an explicit identification of the number of access nodes identified in the handover request message received from the relay node, and further comprising determining the number of bits used to identify each access node in the handover request received from the relay node on the basis of said explicit identification in the handover request message received from the relay node of the number of access nodes identified in the handover request message received from the relay node.

11. A method according to any of claims 4 to 9, wherein the handover request message received from the relay node identifies said plurality of access nodes by an identifier for a group whose composition is known to the receiver of the handover request message.

12. An apparatus comprising: a processor and memory including computer program code, wherein the memory and the computer program are configured to, with the processor, cause the apparatus to: transmit from a relay node (18) via a wireless interface to an access node (2) associated with said relay node a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes; and **in that** the memory and the computer program are configured to, with the processor, cause the apparatus to identify a plurality of said access nodes to said field.

13. An apparatus comprising: a processor and memory including computer program code, wherein the memory and the computer program are configured to, with the processor, cause the apparatus to: receive from a relay node (18) at an access node (2) associated with said relay node via a wireless interface a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes; and **in that** the memory and the computer program are configured to, with the processor, cause the apparatus to identify a plurality of said access nodes from said field.

14. A computer program product comprising program code means which when loaded into a computer controls the computer to transmit from a relay node (18) via a wireless interface to an access node (2) associated with said relay node a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes.

15. A computer program product comprising program code means which when loaded into a computer controls the computer to receive from a relay node (18) at an access node (2) associated with said relay node via a wireless interface a handover request message relating to handover of a communication device (30) from said relay node to a new access node, wherein the relay node (18) is configured to forward data between the associated access node (2) and the communication device (30), **characterised in that** the handover request message identifies a plurality of access nodes as candidates for the new access node, and the handover request message includes a field identifying said plurality of access nodes; and **in that** the program code means controls the computer to identify a plurality of said access nodes from said field.

## Patentansprüche

1. Verfahren, umfassend: von einem Relaisknoten (18) über eine Drahtlosschnittstelle an einen mit dem Relaisknoten assoziierten Zugangsknoten (2) erfolgendes Übertragen einer Handover-Anforderungsnachricht, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält.

2. Verfahren nach Anspruch 1, wobei das Feld eine Reihe jeweiliger Identifizierer für die Vielzahl von Zugangsknoten enthält und die jeweiligen Identifizierer in einer Präferenzreihenfolge angeordnet sind.

3. Verfahren nach Anspruch 1, wobei das Feld eine variable Länge hat; und die Handover-Anforderungsnachricht eine separate Identifizierung der Zahl von in dem Feld identifizierten Zugangsknoten enthält.

4. Verfahren, umfassend: von einem Relaisknoten (18) an einem mit dem Relaisknoten assoziierten Zugangsknoten (2) über eine Drahtlosschnittstelle erfolgendes Empfangen einer Handover-Anforderungsnachricht, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält.

5. Verfahren nach Anspruch 4, wobei das Feld eine Vielzahl von Physical Cell IDs zum Identifizieren der Vielzahl von Zugangsknoten umfasst und wobei das Feld ein Cell-Global-Identifier-Feld ist.

6. Verfahren nach Anspruch 4, umfassend: Senden einer jeweiligen Handover-Anforderungsnachricht an einen oder mehrere der Zugangsknoten, die in der vom Relaisknoten (18) empfangenen Handover-Anforderungsnachricht identifiziert sind, Senden einer Vielzahl von Handover-Anforderungsnachrichten an eine Vielzahl der Zugangsknoten, die in der vom Relaisknoten (18) empfangenen Handover-Anforderungsnachricht identifiziert sind, Empfangen einer Angabe, dass der Zugangsknoten Ressourcen dafür aufweist, um der neue Zugangsknoten für die Kommunikationseinrichtung zu sein, von einem der Vielzahl von Zugangsknoten und Senden einer Handover-Aufhebungsnachricht an mindestens einige der übrigen von der Vielzahl von Zugangsknoten.

7. Verfahren nach Anspruch 4, umfassend: Senden einer jeweiligen Handover-Anforderungsnachricht an einen oder mehrere der Zugangsknoten, die in der vom Relaisknoten (18) empfangenen Handover-Anforderungsnachricht identifiziert sind, Senden von Handover-Anforderungsnachrichten an die Vielzahl von Zugangsknoten gemäß der Präferenz, die durch die Reihenfolge angegeben ist, in der die Vielzahl von Zugangsknoten in der vom Relaisknoten (18) empfangenen Handover-Anforderungsnachricht identifiziert ist.

8. Verfahren nach Anspruch 4, umfassend: Senden einer jeweiligen Handover-Anforderungsnachricht an einen oder mehrere der Zugangsknoten, die in der vom Relaisknoten (18) empfangenen Handover-Anforderungsnachricht identifiziert sind, Senden einer Handover-Anforderungsnachricht an einen ersten der Vielzahl von Zugangsknoten und Senden einer Handover-Anforderungsnachricht an einen anderen der Vielzahl von Zugangsknoten nur, falls eine Angabe, dass der erste der Vielzahl von Zugangsknoten tatsächlich Ressourcen dafür aufweist, um der neue Zugangsknoten für die Kommunikationseinrichtung zu sein, nicht innerhalb einer vorbestimmten Zeit empfangen wird.

9. Verfahren nach einem der Ansprüche 4 bis 8, das ferner Bestimmen der Zahl von Bits umfasst, die zum Identifizieren jedes Zugangsknotens verwendet werden, wofür über die Umgebung des Transitzugangsknotens gesammelte Informationen zugrunde gelegt werden.

10. Verfahren nach einem der Ansprüche 4 bis 8, wobei die vom Relaisknoten empfangene Handover-Anforderungsnachricht eine explizite Identifizierung der Zahl von Zugangsknoten enthält, die in der vom Relaisknoten empfangenen Handover-Anforderungsnachricht identifiziert sind, und ferner umfassend Bestimmen der Zahl von Bits, die zum Identifizieren jedes Zugangsknotens in der vom Relaisknoten empfangenen Handover-Anforderung verwendet werden, wofür die explizite Identifizierung der Zahl von Zugangsknoten, die in der vom Relaisknoten empfangenen Handover-Anforderungsnachricht identifiziert sind, in der vom Relaisknoten empfangenen Handover-Anforderungsnachricht zugrunde gelegt wird.

11. Verfahren nach einem der Ansprüche 4 bis 9, wobei die vom Relaisknoten empfangene Handover-Anforderungsnachricht die Vielzahl von Zugangsknoten durch einen Identifizierer für eine Gruppe identifiziert, deren Zusammensetzung dem Empfänger der Handover-Anforderungsnachricht bekannt ist.

12. Vorrichtung, umfassend: einen Prozessor und einen Speicher, der Computerprogrammcode enthält, wobei der Speicher und das Computerprogramm konfiguriert sind, um mit dem Prozessor zu veranlassen, dass die Vorrichtung: von einem Relaisknoten (18) über eine Drahtlosschnittstelle an einen mit dem Relaisknoten assoziierten Zugangsknoten (2) eine Handover-Anforderungsnachricht überträgt, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält; und dadurch, dass der Speicher und das Computerprogramm konfiguriert sind, um mit dem Prozessor zu veranlassen, dass die Vorrichtung eine Vielzahl der Zugangsknoten zu dem Feld identifiziert.

13. Vorrichtung, umfassend: einen Prozessor und einen Speicher, der Computerprogrammcode enthält, wobei der Speicher und das Computerprogramm konfiguriert sind, um mit dem Prozessor zu veranlassen, dass die Vorrichtung: von einem Relaisknoten (18) an einem mit dem Relaisknoten assoziierten Zugangsknoten (2) über eine Drahtlosschnittstelle eine Handover-Anforderungsnachricht empfängt, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält; und dadurch, dass der Speicher und das Computerprogramm konfiguriert sind, um mit dem Prozessor zu veranlassen, dass die Vorrichtung eine Vielzahl der Zugangsknoten aus dem Feld identifiziert.

14. Computerprogrammprodukt, umfassend ein Programmcodemittel, das, wenn es in einen Computer geladen ist, den Computer so steuert, dass von einem Relaisknoten (18) über eine Drahtlosschnittstelle an einen mit dem Relaisknoten assoziierten Zugangsknoten (2) eine Handover-Anforderungsnachricht übertragen wird, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält.

15. Computerprogrammprodukt, umfassend ein Programmcodemittel, das, wenn es in einen Computer geladen ist, den Computer so steuert, dass von einem Relaisknoten (18) an einem mit dem Relaisknoten assoziierten Zugangsknoten (2) über eine Drahtlosschnittstelle eine Handover-Anforderungsnachricht empfangen wird, die ein Handover einer Kommunikationseinrichtung (30) von dem Relaisknoten an einen neuen Zugangsknoten betrifft, wobei der Relaisknoten (18) konfiguriert ist, um Daten zwischen dem assoziierten Zugangsknoten (2) und der Kommunikationseinrichtung (30) weiterzuleiten, **dadurch gekennzeichnet, dass** die Handover-Anforderungsnachricht eine Vielzahl von Zugangsknoten als für den neuen Zugangsknoten in Frage kommend identifiziert und die Handover-Anforderungsnachricht ein die Vielzahl von Zugangsknoten identifizierendes Feld enthält; und dadurch, dass das Programmcodemittel den Computer so steuert, dass eine Vielzahl der Zugangsknoten aus dem Feld identifiziert wird.

## Revendications

1. Un procédé comprenant: la transmission à partir d'un noeud relais (18) par l'intermédiaire d'une interface sans fil vers un noeud d'accès (2) associé audit noeud relais d'un message de demande de transfert relatif à un transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès, et le message de demande de transfert comprend un champ identifiant ladite pluralité de noeuds d'accès.

2. Un procédé selon la revendication 1, dans lequel le champ contient une série d'identifiants respectifs pour la pluralité de noeuds d'accès, et les identifiants respectifs sont agencés par ordre de préférence.

3. Un procédé selon la revendication 1, dans lequel le champ est de longueur variable et le message de demande de transfert contient une identification distincte du nombre de noeuds d'accès identifiés dans ledit champ.

4. Un procédé comprenant : la réception à partir d'un noeud relais (18) au niveau d'un noeud d'accès (2) associé audit noeud relais par l'intermédiaire d'une interface sans fil d'un message de demande de transfert relatif à un transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès, et le message de demande de transfert contient un champ identifiant ladite pluralité de noeuds d'accès.

5. Un procédé selon la revendication 4, dans lequel le champ comprend une pluralité d'identifiants de cellule physique destinés à l'identification de la pluralité de noeuds d'accès et dans lequel le champ est un champ d'identifiant global de cellule.

6. Un procédé selon la revendication 4, comprenant : l'envoi d'un message de demande de transfert respectif à un ou plusieurs desdits noeuds d'accès identifiés dans le message de demande de transfert reçu du noeud relais (18), l'envoi d'une pluralité de messages de demande de transfert à une pluralité desdits noeuds d'accès identifiés dans le message de demande de transfert reçu du noeud relais (18), la réception à partir d'un noeud de ladite pluralité de noeuds d'accès d'une indication que ledit noeud d'accès possède des ressources pour être ledit nouveau noeud d'accès pour le dispositif de communication, et l'envoi d'un message d'annulation de transfert à au moins certains des noeuds restants de ladite pluralité de noeuds d'accès.

7. Un procédé selon la revendication 4, comprenant : l'envoi d'un message de demande de transfert respectif à un ou plusieurs desdits noeuds d'accès identifiés dans le message de demande de transfert reçu du noeud relais (18), l'envoi de messages de demande de transfert à ladite pluralité de noeuds d'accès conformément à la préférence indiquée par l'ordre dans lequel ladite pluralité de noeuds d'accès sont identifiés dans le message de demande de transfert reçu du noeud relais (18).

8. Un procédé selon la revendication 4, comprenant : l'envoi d'un message de demande de transfert respectif à un ou plusieurs desdits noeuds d'accès identifiés dans le message de demande de transfert reçu du noeud relais (18), l'envoi d'un message de demande de transfert à un premier noeud de ladite pluralité de noeuds d'accès et l'envoi d'un message de demande de transfert à un autre noeud de ladite pluralité de noeuds d'accès uniquement si une indication que ledit premier noeud de ladite pluralité de noeuds d'accès ne possède pas de ressources pour être le nouveau noeud d'accès pour le dispositif de communication n'est pas reçue dans un délai prédéterminé.

9. Un procédé selon l'une quelconque des revendications 4 à 8, comprenant en outre la détermination du nombre de bits utilisés de façon à identifier chaque noeud d'accès en fonction d'informations recueillies relatives à l'environnement du noeud d'accès intermédiaire.

10. Un procédé selon l'une quelconque des revendications 4 à 8, dans lequel le message de demande de transfert reçu du noeud relais contient une identification explicite du nombre de noeuds d'accès identifiés dans le message de demande de transfert reçu du noeud relais, et comprenant en outre la détermination du nombre de bits utilisés de façon à identifier chaque noeud d'accès dans la demande de transfert reçue du noeud relais en fonction de ladite identification explicite dans le message de demande de transfert reçu du noeud relais du nombre de noeuds d'accès identifiés dans le message de demande de transfert reçu du noeud relais.

11. Un procédé selon l'une quelconque des revendications 4 à 9, dans lequel le message de demande de transfert reçu du noeud relais identifie ladite pluralité de noeuds d'accès par un identifiant pour un groupe dont la composition est connue du récepteur du message de demande de transfert.

12. Un appareil comprenant: un processeur et une mémoire contenant du code de programme informatique, la mémoire et le programme informatique étant configurés de façon à, avec le processeur, amener l'appareil à : transmettre à partir d'un noeud relais (18) par l'intermédiaire d'une interface sans fil vers un noeud d'accès (2) associé audit noeud relais un message de demande de transfert relatif au transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès et le message de demande de transfert contient un champ identifiant ladite pluralité de noeuds d'accès, et **en ce que** la mémoire et le programme informatique sont configurés de façon à, avec le processeur, amener l'appareil à identifier une pluralité desdits noeuds d'accès auprès dudit champ.

13. Un appareil comprenant: un processeur et une mémoire contenant du code de programme informatique, la mémoire et le programme informatique étant configurés de façon à, avec le processeur, amener l'appareil à : recevoir à partir d'un noeud relais (18) au niveau d'un noeud d'accès (2) associé audit noeud relais par l'intermédiaire d'une interface sans fil un message de demande de transfert relatif au transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès et le message de demande de transfert contient un champ identifiant ladite pluralité de noeuds d'accès, et **en ce que** la mémoire et le programme informatique sont configurés de façon à, avec le processeur, amener l'appareil à identifier une pluralité desdits noeuds d'accès à partir dudit champ.

14. Un produit de programme informatique contenant un moyen de code de programme qui, lorsqu'il est chargé dans un ordinateur, conduit l'ordinateur à transmettre à partir d'un noeud relais (18) par l'intermédiaire d'une interface sans fil à un noeud d'accès (2) associé audit noeud relais un message de demande de transfert relatif à un transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès, et le message de demande de transfert contient un champ identifiant ladite pluralité de noeuds d'accès.

15. Un produit de programme informatique contenant un moyen de code de programme qui, lorsqu'il est chargé dans un ordinateur, conduit l'ordinateur à recevoir à partir d'un noeud relais (18) au niveau d'un noeud d'accès (2) associé audit noeud relais par l'intermédiaire d'une interface sans fil un message de demande de transfert relatif au transfert d'un dispositif de communication (30) dudit noeud relais vers un nouveau noeud d'accès, le noeud relais (18) étant configuré de façon à transmettre des données entre le noeud d'accès associé (2) et le dispositif de communication (30), **caractérisé en ce que** le message de demande de transfert identifie une pluralité de noeuds d'accès en tant que candidats pour le nouveau noeud d'accès et le message de demande de transfert contient un champ identifiant ladite pluralité de noeuds d'accès, et **en ce que** le moyen de code de programme conduit l'ordinateur à identifier une pluralité desdits noeuds d'accès à partir dudit champ.
